Europäisches Patentamt

(19) European Patent Office

Office européen des brevets

(11) Publication number : **0 384 751 B1**

# (12) EUROPEAN PATENT SPECIFICATION

(45) Date of publication of patent specification :
15.11.95 Bulletin 95/46

(51) Int. Cl.⁶ : **H02N 13/00**

(21) Application number : 90301900.8

(22) Date of filing : 22.02.90

(54) **Electrostatic locating apparatus.**

(30) Priority : 23.02.89 JP 44930/89
14.03.89 JP 61902/89
09.11.89 JP 289913/89
21.11.89 JP 300752/89
30.11.89 JP 309419/89

(43) Date of publication of application :
29.08.90 Bulletin 90/35

(45) Publication of the grant of the patent :
15.11.95 Bulletin 95/46

(84) Designated Contracting States :
DE FR GB SE

(56) References cited :
US-A- 4 521 854
REVIEW OF SCIENTIFIC INSTRUMENTS. vol.
57, no. 9, September 1986, NEW YORK US
pages 2250 - 2253; S.ARNOLD; L.M.FOLAN:
"FLUORESCENCE SPECTROMETER FOR A
SINGLE ELECTRODYNAMICALLY LEVITATED
MICROPARTICLE"
JOURNAL OF CRYSTAL GROWTH. vol. 47, no.
8, August 1979, AMSTERDAM NL pages 219 -
229; EYER; NITSCHE; ZIMMERMAN.: "A
DOUBLE-ELLIPSOID MIRROR FURNACE FOR
ZONE CRYSTALLIZATION EXPERIMENTS IN
SPACELAB"

(56) References cited :
1986 IEEE INDUSTRY APPLICATIONS SOCI-
ETY ANNUAL MEETING: CONFERENCE RE-
CORD vol. 2, 1986, pages 1338 - 1341;
W.K.RHIM; S.K.CHUNG; etc.: "LARGE
CHARGED DROP LEVITATION AGAINST
GRAVITY"

(73) Proprietor : ISHIKAWAJIMA-HARIMA
JUKOGYO KABUSHIKI KAISHA
2-1, Ote-machi 2-chome
Chiyoda-ku Tokyo-to (JP)

(72) Inventor : Ogihara, Masaaki
No. 2-20-9-201 Gohongi,
Meguro-ku
Tokyo-to (JP)
Inventor : Aoyama, Michio
No. 3-10-9 Wakaba,
Yahatanishi-ku
Kitakyushu-shi Fukuoka-ken (JP)
Inventor : Fujii, Tsumoru
No. 2-12-5-410, Onitaka
Ichikawa-shi Chiba-ken (JP)
Inventor : Ikegami, Yuji
No. 6-1-8-204, Isobe
Chiba-shi Chiba-ken (JP)
Inventor : Shinohara, Joji
No. 4-11-13, Okusawa
Setagaya-ku Tokyo-to (JP)

(74) Representative : Jennings, Nigel Robin et al
KILBURN & STRODE
30 John Street
London WC1N 2DD (GB)

## Description

The present invention relates to an electrostatic locating apparatus which utilises electrostatic forces to retain a body in a stationary state of levitation, i.e. mechanically unsupported, in a vessel.

In the course of recent research and development of novel materials, it has been proposed that novel materials be developed not on the earth but in space where the extremely small gravitational forces mean that raw materials or articles may be maintained levitated in a stationary non-contact state at one point in space for carrying out heating, melting, solidifying or other processes on the material. Realisation of this proposal will require the development of not only techniques for retaining a body in a stationary non-contact state in space but also techniques for heating or melting of such a body.

One of the techniques for retaining a body in a stationary levitated state is to use an electrostatic field. Practical electrostatic positioners utilising this concept have been proposed.

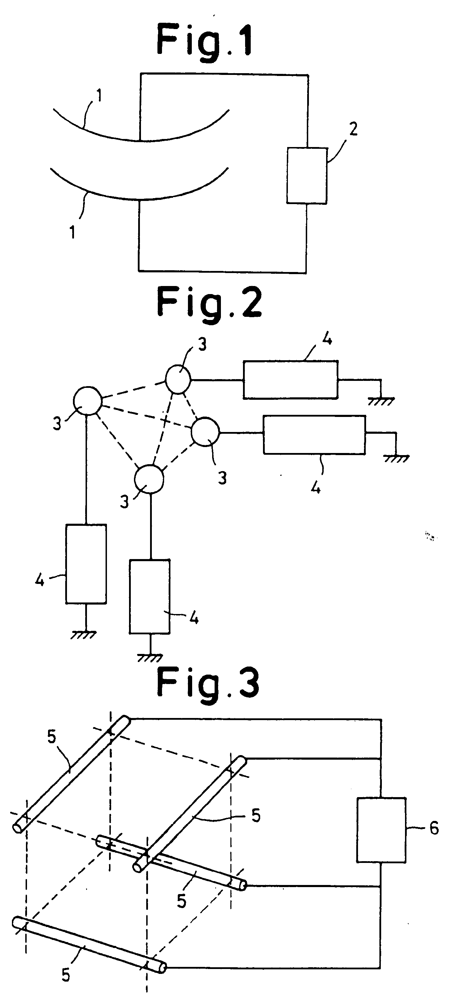

Such known electrostatic positioners are disclosed, for example, in US Patent No.4521854 and in an article entitled "Development of an electrostatic positioner for space material processing" in REVIEW OF SCIENTIFIC INSTRUMENTS, Vol. 56, No.2, February 1985, pp. 307-317. In a typical example shown in Figure 1, a pair of dish-like electrodes 1 are positioned vertically spaced apart to produce an electric field therebetween, using a DC power supply 2. In another example shown in Figure 2, four spherical electrodes 3 are disposed at the vertexes of a tetrahedron and are respectively connected to independent DC power supplies 4 to establish an electric field within the tetrahedron defined by the electrodes 3. The voltage of the power supply 2 or 4 is controlled such that any deviation in the position of the charged body in the electric field defined by the electrodes 1 or 3 is compensated for and corrected.

The apparatus referred to above in which the electric field is established by merely applying direct current to the electrodes 1 or 3 will require monitoring of any deviation in the position of the charged body by a video camera or the like and control of the power supply 2 or 4 so as to return the body to its desired position within a rapid response time in response to the monitored result. This results in technical difficulties in controlling the position of the charged body and in retaining the body in the stationary state.

No confining forces for restraining the body in the lateral direction exist in the electric field established between the dish-like electrodes 1. Such lateral restraining forces are weak even in the electric field established by the spherical electrodes 3. There is thus the problem that the levitated body is liable to deflect or escape laterally.

In order to overcome these problems, an apparatus has been proposed in which grid-shaped electrodes are used (Japanese Patent Application No.296782/1988). For instance, as shown in Figure 3, two pairs of parallel rod-like electrodes 5 are positioned to intersect in a mutually perpendicular relationship, thereby defining a space in the form of a cube. Each pair of electrodes 5 is connected to an AC power supply 6 or an AC power supply with a direct current component superposed on the alternating current.

Such an electrostatic positioner comprising an even number of rod-shaped electrodes 5 defining a cuboidal space and connected to an AC power supply 6 has both voltage and frequency controls unlike apparatus using dish-shaped or spherical electrodes 1 or 3, so that it has improved capability for position-controlling of the levitated body. However, the range or zone of effective position control of the levitated body is small so that it is still difficult to maintain the body in a stationary levitated state in a stable manner.

Another type of electrostatic positioner is disclosed in an article on which the precharacterising portion of Claim 1 is based and which is entitled "Fluorescence Spectrometer for a Single Electrodynamically Levitated Particle" in REVIEW OF SCIENTIFIC INSTRUMENTS, Vol.57, No.9, 1986, pp.2250-2253. This article describes a levitator comprising a first, ring-shaped electrode and upper and lower second electrodes lying on the axis defined by the ring electrode, on each side of the ring. An AC voltage is applied between the electrodes which may have a DC component superposed on it.

It is the object of the present invention to provide an electrostatic locating apparatus having a wide range or zone in which the levitated body can be effectively position-controlled in a stable manner.

According to the present invention an electrostatic locating apparatus for retaining a charged specimen in space without physically contacting it is characterised in that it comprises four first electrodes which define a space and are disposed around a hypothetical central axis in two associated diagonally opposed pairs, at least two second electrodes which lie on the central axis, an AC power supply to respective terminals of which the two pairs of first electrodes are connected and a DC power supply connected to the second electrodes, which is arranged to apply to them a voltage whose polarity is the same as that of the charge of the specimen, whereby, in use, the charged specimen is stably retained at a point on the central axis between the second electrodes.

In a first preferred embodiment the electrodes are arranged at the vertices of a square, when viewed along the central axis. The first- electrodes are preferably elongate and extend parallel to one another and to the central axis.

Further details of the present invention will be apparent from the following description of certain preferred embodiments which is given with reference to Figures 4 to 13 of the accompanying diagrammatic drawings, in which:

Figure 4 is a side elevation of a first embodiment of the present invention;

Figure 5 is a plan view illustrating the movement of a specimen in the embodiment shown in Figure 4;

Figure 6 is a further view illustrating an alternative movement pattern of the specimen;

Figure 7 is a side elevation of a second embodiment of the present invention;

Figure 8 is a plan view illustrating the movability of the first electrodes in the embodiment shown in Figure 7;

Figure 9 is a plan view illustrating the shape of the arcuate convex surface of the first electrodes used in the embodiment shown in Figure 7;

Figure 10 is a side elevation of a third embodiment of the present invention;

Figure 11 is a sectional side elevation of a first electrode used in the embodiment shown in Figure 10;

Figure 12 is a view of a first modification of the third embodiment shown in Figure 10; and

Figure 13 is a view of a second modification of the third embodiment shown in Figure 10.

The same reference numerals are used to designate similar parts throughout the Figures.

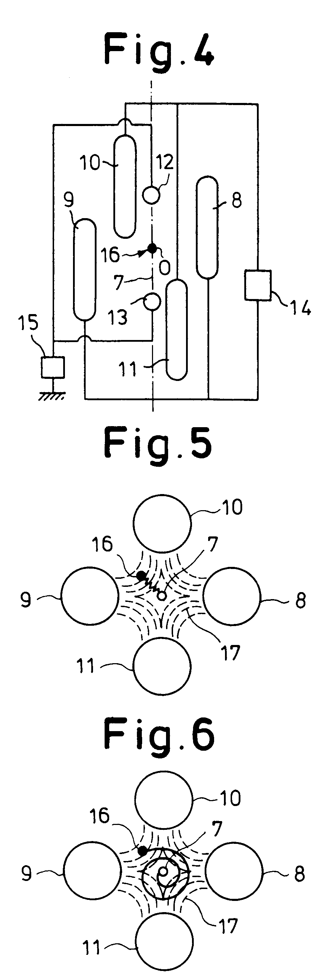

Referring first to Figures 4, 5 and 6, a first preferred embodiment of the present invention will now be described.

An origin O and a centre axis 7 passing through the origin O, preferably vertically, are defined in space. Four first cylinder-shaped electrodes 8, 9, 10 and 11 are arranged parallel with the axis 7 and at positions which are equidistant from the axis 7 and which form the vertices of a square when viewed along the axis 7. Two second spherical electrodes 12 and 13 lie on the axis 7, vertically spaced apart but lying within the space defined by the first electrodes 8 to 11. The two pairs of diagonally opposed first electrodes 8, 9, 10 and 11 are connected to respective terminals of an AC power supply 14. The second electrodes 12 and 13 are connected to a DC power supply 15. The reference numeral 16 denotes an electrically charged specimen.

The AC power supply may supply a pure alternating current or an alternating current with a direct current superimposed on it.

The AC power supply 14 is controlled so that the frequency of the supply 14 can be varied from a lower level of the order of 1 Hz to a higher level of the order of hundreds Hz, in dependence on the mass, charge, diameter and the like of the specimen 16.

When an AC voltage is applied from the supply 14 to the cylindrical first electrodes 8-11, the polarities of the electrode pairs 8,9 and 10,11 are alternately changed so that, as shown in Figures 5 and 6, electric lines of force 17 are produced between the electrodes 8-11. Since the electric field lines 17 are curved toward the axis 7, the charged specimen 16 tends to approach the axis 7 while oscillating along the electric lines of force 17 as shown in Figure 5 at a frequency approximately equal to the frequency of the AC power supply 14; alternatively, it may adopt a spiral motion as shown in Figure 6 in its approach toward the centre axis 7. Finally, the specimen 16 is retained on the centre axis 7 in a stationary state. A DC potential having the same polarity as that of the charged specimen 16 is applied from the DC power supply 15 to the second electrodes 12 and 13 so that a Coulomb force (that is, an electrical repelling force) acts on the specimen 16 between the second electrodes 12 and 13. The Coulomb force thus produced is balanced with the mass of the specimen 16 and the specimen 16 is maintained in a state of stationary levitation and is thus also stabilised in the direction of the centre axis 7.

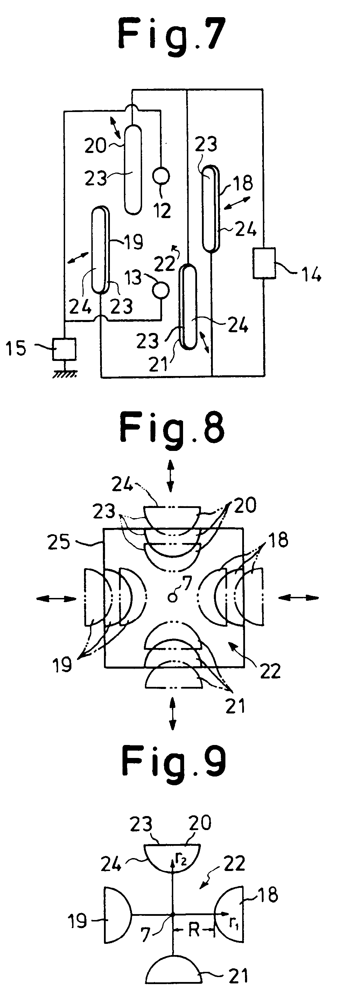

Referring next to Figures 7, 8 and 9, a second preferred embodiment of the present invention will be described in which the first electrodes 18-21 are in the form of semicircular cross-section columns. Each first electrode has an arcuate convex surface 23 facing inwards towards the space 22 defined by the first electrodes 18-21 and a flat surface 24 facing away from the space 22. The first electrodes 18-21 are arranged to be movable in mutually perpendicular directions $r_1$ and $r_2$, radially of the centre axis 7.

The same effects are achieved in the second embodiment as those described above in relation to the first. The semicircular cross-sectional shape of the first electrodes 18-21 in the second embodiment is employed because the outer half of the cylindrical first electrodes 8-11 in the first embodiment in Figure 5 and 6 is unnecessary. The shape of the first electrodes in the second embodiment contributes to savings in size and weight without prejudicing the efficiency with which the specimen 16 is retained in a stable, levitated state.

Moreover, since the first electrodes 18-21 of the second embodiment are arranged to be independently movable, electric lines of force can be produced with the electrodes 18-21 at varying distances from the centre axis 7. When the specimen 16 has a relatively large diameter, the distances between the first electrodes 18-21 are increased so that a high voltage may be applied between the electrodes 18-21; consequently, the electrostatic forces may be increased to support the specimen 16. If the four first electrodes are not movable, electric discharges may occur between the first electrodes when the voltage is high and the voltage applied to the electrodes has to be dropped to stop the electric breakdown. In the second embodiment, increasing the distances between the four first electrodes suppresses or prevents electric discharges, and eliminates the necessity of dropping the applied voltage to stop any discharge. Therefore, an electrostatic or electric force sufficient to levitate the specimen can be easily maintained.

In the second embodiment, the cross-section of the first electrodes may be in the shape of a crescent or a sector of a circle. The arcuate convex surface of each of the first electrodes 18-21 may be defined by a curve which is an orthogonal hyperbola expressed by the equation

$$r_1 - r_2 = \pm R^2$$

wherein R is one half of the distance between the opposed convex surfaces of the first electrodes as shown in Figure 9.

The first electrodes may be so designed and constructed that only one electrode of each pair of opposed electrodes is movable.

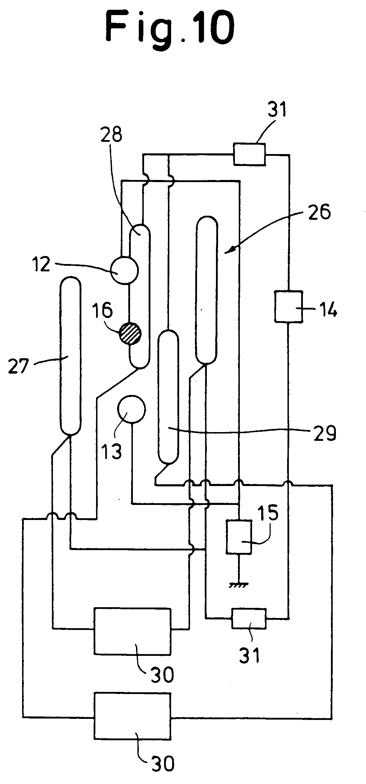

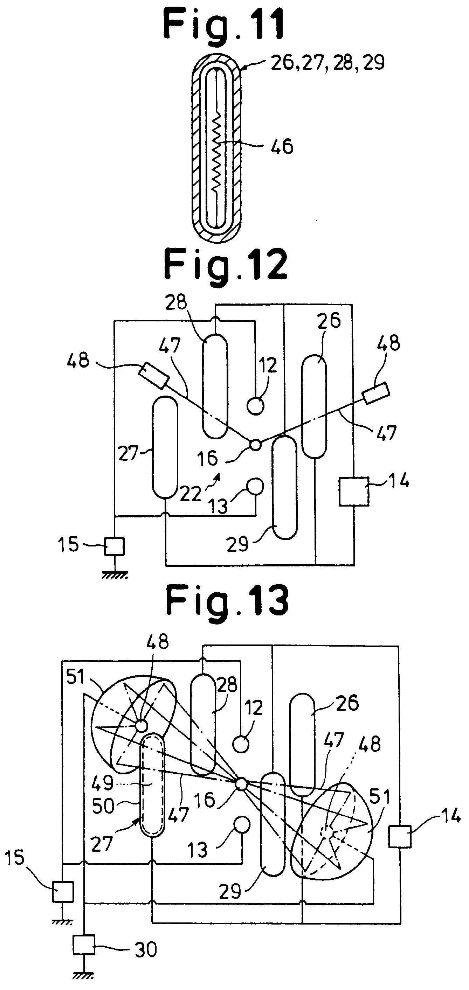

In the third embodiment illustrated in Figure 10, the first electrodes 26,27,28 and 29 are provided with heat emitting portions similar to metal or graphite heaters which emit heat when energised by an electric current. Alternatively, heating elements 46, which emit heat when energised by an electric current, are arranged inside the first electrodes 26-29 as shown in Figure 11. The heat emitting portions or heating elements 46 are connected to a DC or AC heating power supply 30.

It should be noted that a load 31 is incorporated between the first electrodes 26-29 and the AC power supply 14 to provide impedance sufficient to prevent the current from the heating power supply 30 from flowing into the AC power supply 14.

The third embodiment can achieve the same effects as those achieved by the other embodiments. Furthermore, as current from the heating power supply flows through the first electrodes 26-29, they generate heat by virtue of their own resistance and this heat is transmitted to the specimen 16 to heat or melt it. In a gas atmosphere, heat transmission is by convection and radiation. In a vacuum such as cosmic space, the heat is transmitted to the specimen 16 mainly by radiation.

The load 31 is arranged to provide a degree of impedance dependent upon the type of the heating power supply 30 used, and is inserted into the AC power supply 14 to eliminate any adverse effect due to the flow of the current from the heating power supply 30.

Thus the first electrodes 26-29 serve also as heating sources which simplifies the design and construction of a heating furnace by eliminating the need for shielding and cooling means for the first electrodes 26-29.

Figure 12 illustrates a first modification of the third embodiment in which, instead of the first electrodes 26-29 themselves being directly heated, heating sources 48, in the form of lasers or the like for directing heating rays 47 such as laser beams or the like to the specimen 16, are arranged outside the space 22 defined by the first electrodes 26-29. This modification can achieve the same effects as those achieved by the unmodified third embodiment.

Figure 13 illustrates a second modification of the third embodiment in which the first electrodes 26-29 are transparent and are made of quartz glass 49 coated with a transparent, conductive coating 50 such as NESA-coat, e.g. $S_nO_2$, $I_nO_3 + S_nO_2$ or $T_iO_2$, through sputtering, ion plating or baking. Hemispherical reflectors 51 are used to direct heat rays 47 from the heat sources 48 to the specimen 16. The second modification can achieve the same effects as those achieved by the unmodified third embodiment and has enhanced efficiency in transmitting heat to the specimen 16, since the rays 47 are not shielded by the first electrodes 26-29 which are transparent to the rays 47.

## Claims

1. Electrostatic locating apparatus for retaining a charged specimen in space without physically contacting it characterised in that it comprises four first electrodes (8,9,10,11;18.19.20,21;26, 27,28,29;32;43,44, 45) which define a space and are disposed around a hypothetical central axis (7) in two associated diagonally opposed pairs, at least two second electrodes (12,13;34,35) which lie on the central axis (7), an AC power supply (14) to respective terminals of which the two pairs of first electrodes are connected and a DC power supply connected to the second electrodes, which is arranged to apply to them a voltage whose polarity is the same as that of the charge of the specimen, whereby, in use, the charged specimen (16) is stably retained at a point on the central axis (7) between the second electrodes.

2. Apparatus as claimed in Claim 1 characterised in that the four first electrodes (8,9,10,11;18,19,20, 21;26,27,28,29) are arranged at the vertices of a square when viewed along the central axis (7).

3. Apparatus as claimed in Claim 2 characterised in that the first electrodes (18,19,20,21) have arcuate convex surfaces (23) facing towards the central axis (7).

4. Apparatus as claimed in Claim 2 or Claim 3 characterised in that at least one electrode of each diagonally opposed pair of first electrodes (18,19 and 20,21) is movable along the associated diagonal of the square.

5. Apparatus as claimed in any one of Claims 1 to 4 characterised in that the first electrodes (26,27,28,29) are adapted to emit heat when an electric current is applied to them.

6. Apparatus as claimed in any one of Claims 1 to 5 characterised by at least one radiant heat source (48) arranged to direct radiant heat at the charged specimen (16).

7. Apparatus as claimed in Claim 6 characterised by reflectors (51) arranged to reflect heat from the heat source (48) onto the charged specimen (16) and in that the first electrodes (26,27,28,29) are substantially transparent to radiant heat.

## Patentansprüche

1. Elektrostatische Haltevorrichtung zum Festhalten einer geladenen Probe im Raum ohne sie physikalisch zu berühren, dadurch gekennzeichnet, daß sie vier erste Elektroden (8, 9, 10, 11; 18, 19, 20, 21; 26, 27, 28, 29; 32; 43, 44, 45) umfaßt, die einen Raum definieren und um eine hypothetische Mittelachse (7) in zwei einander zugeordneten, diagonal gegenüberliegenden Paaren angeordnet sind, wenigstens zwei zweite Elektroden (12, 13; 34, 35), die auf der Mittelachse (7) liegen, eine Wechselstrom-Energiequelle (14), mit deren entsprechenden Anschlüssen die zwei Paare erster Elektroden verbunden sind, und eine mit den zweiten Elektroden verbundene Gleischstrom-Energiequelle, die so ausgebildet ist, daß an diese eine Spannung angelegt wird, deren Polarität dieselbe wie die der Ladung der Probe ist, wodurch während des Gebrauchs die geladene Probe (16) stabil an einem Punkt auf der Mittelachse (7) zwischen den zweiten Elektroden gehalten wird.

2. Vorrichtung nach Anspruch 1, dadurch gekennzeichnet, daß die vier ersten Elektroden (8, 9, 10, 11; 18, 19, 20, 21; 26, 27, 28, 29) an den Eckpunkten eines Quadrates angeordnet sind, betrachtet entlang der Mittelachse (7).

3. Vorrichtung nach Anspruch 2, dadurch gekennzeichnet, daß die ersten Elektroden (18, 19, 20, 21) konvex gewölbte Oberflächen (23) aufweisen, die zu der Mittelachse (7) zeigen.

4. Vorrichtung nach Anspruch 2 oder Anspruch 3, dadurch gekennzeichnet, daß wenigstens eine Elektrode jedes einander diagonal gegenüberliegenden Paares von ersten Elektroden (18, 19 und 20, 21) entlang der zugeordneten Diagonale des Quadrates beweglich ist.

5. Vorrichtung nach einem der Ansprüche 1 bis 4, dadurch gekennzeichnet, daß die ersten Elektroden (26, 27, 28, 29) so ausgebildet sind, daß sie Wärme abgeben, wenn an sie ein elektrischer Strom angelegt wird.

6. Vorrichtung nach einem der Ansprüche 1 bis 5, gekennzeichnet durch wenigstens eine Strahlungswärmequelle (48), die so angeordnet ist, daß sie Strahlungswärme auf die geladene Probe (16) richtet.

7. Vorrichtung nach Anspruch 6, dadurch gekennzeichnet, daß Reflektoren (51) vorhanden und so angeordnet sond, daß sie Wärme von der Wärmequelle (48) auf die geladene Probe (16) reflektieren, und daß die ersten Elektroden (26, 27, 28, 29) im wesentlichen durchlässig für Strahlungswärme sind.

## Revendications

1. Dispositif de positionnement électrostatique destiné à maintenir un spécimen chargé dans l'espace sans rentrer en contact physique avec celui-ci, caractérisé en ce qu'il comprend quatre premières électrodes (8, 9, 10, 11 ; 18,19,20, 21 ; 26, 27, 28, 29 ; 32 ; 43, 44, 45) lesquelles définissent un espace et sont disposées autour d'un axe central théorique (7) suivant deux paires associées opposées en diagonale, au moins deux secondes électrodes (12, 13 ; 34, 35) qui s'étendent sur l'axe central (7), une alimentation en courant alternatif (14) aux bornes respectives desquelles les deux paires des premières électrodes sont reliées et une alimentation en courant continu reliée aux secondes électrodes, laquelle est agencée afin de leur appliquer une tension dont la polarité est la même que celle de la charge du spécimen, d'où il résulte qu'en utilisation, le spécimen chargé (16) est maintenu de façon stable à un point situé sur l'axe central (7) entre les secondes électrodes.

2. Dispositif selon la revendication 1 caractérisé en ce que les quatre premières électrodes (8, 9, 10, 11 ; 18, 19, 20, 21 ; 26, 27, 28, 29) sont agencées aux sommets d'un carré lorsqu'on les observe le long de l'axe central (7).

3. Dispositif selon la revendication 2 caractérisé en ce que les premières électrodes (18, 19, 20, 21) présentent des surfaces convexes incurvées (23) faisant face à l'axe central (7).

4. Dispositif selon la revendication 2 ou la revendication 3 caractérisé en ce qu'au moins une électrode de chaque paire opposée en diagonale des premières électrodes (18, 19 et 20, 21) est mobile suivant la diagonale associée du carré.

5. Dispositif selon l'une quelconque des revendications 1 à 4 caractérisé en ce que les premières électrodes (26, 27, 28, 29) sont adaptées pour émettre de la chaleur lorsqu'un courant électrique leur est appliqué.

6. Dispositif selon l'une quelconque des revendications 1 à 5 caractérisé en ce qu'au moins une source de chaleur rayonnante (48) est agencée pour diriger une chaleur rayonnante vers le spécimen chargé (16).

7. Dispositif selon la revendication 6 caractérisé par des réflecteurs (51), agencés afin de réfléchir la chaleur provenant de la source de chaleur (48) vers le spécimen chargé (16) et en ce que les premières électrodes (26, 27, 28, 29) sont pratiquement transparentes à la chaleur rayonnante.

# Fig.1

# Fig.2

# Fig.3

7

# Fig.4

# Fig.5

# Fig.6

# Fig.7

# Fig.8

# Fig.9

EP 0 384 751 B1

# Fig.10

10

# Fig.11

26,27,28,29

46

# Fig.12

28

47

48

26

48

12

27

16

13

22

14

29

15

# Fig.13

48

51

28

12

26

49

47

48

50

16

51

27

47

14

13

29

15

30